(19) Europäisches Patentamt
European Patent Office
Office européen des brevets

(11) Veröffentlichungsnummer: **0 588 165 A1**

(12) **EUROPÄISCHE PATENTANMELDUNG**

(21) Anmeldenummer: **93114051.1**

(22) Anmeldetag: **02.09.93**

(51) Int. Cl.5: **A01N 43/82**, //(A01N43/82, 57:16,55:00,47:38,47:18,47:12, 43:90,43:84,43:76,43:653,43:52, 43:40,43:36,37:32)

(30) Priorität: **15.09.92 DE 4230803**

(43) Veröffentlichungstag der Anmeldung:
**23.03.94 Patentblatt 94/12**

(84) Benannte Vertragsstaaten:
**BE CH DE ES FR GB GR IT LI NL PT**

(71) Anmelder: **BAYER AG**

**D-51368 Leverkusen(DE)**

(72) Erfinder: **Kleefeld, Gerd, Dr.**
**Franziskusstrasse 27**
**D-41468 Neuss(DE)**
Erfinder: **Brandes, Wilhelm, Dr.**
**Eichendorffstrasse 3**
**D-42799 Leichlingen(DE)**
Erfinder: **Dehne, Heinz-Wilhelm, Dr.**
**Krischer Strasse 81**
**D-40789 Monheim(DE)**
Erfinder: **Dutzmann, Stefan, Dr.**
**Rosenberg 10**
**D-40721 Hilden(DE)**
Erfinder: **Kuck, Karl-Heinz, Dr.**
**Pastor-Löh-Strasse 30a**
**D-40764 Langenfeld(DE)**

(54) **Fungizide Wirkstoffkombinationen.**

(57) Mischungen aus dem bekannten 5-(4-Chlorphenyl)-2-methylsulfonyl-1,3,4-oxadiazol der Formel

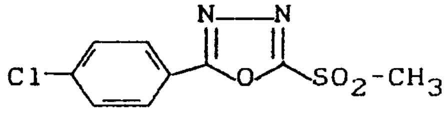

(I)

einerseits und weiteren bekannten Wirkstoffen, die in der Beschreibung aufgeführt sind, besitzen eine überadditive fungizide Wirksamkeit.

EP 0 588 165 A1

Die vorliegende Erfindung betrifft neue Wirkstoffkombinationen, die aus dem bekannten 5-(4-Chlorphenyl)-2-methylsulfonyl-1,3,4-oxadiazol einerseits und weiteren bekannten fungiziden Wirkstoffen andererseits bestehen und sehr gut zur Bekämpfung von Pilzen geeignet sind.

Es ist bereits bekannt, daß 5-(4-Chlorphenyl)-2-methylsulfonyl-1,3,4-oxadiazol fungizide Eigenschaften besitzt (vgl. EP-OS 0 486 798). Die Wirksamkeit dieses Stoffes ist gut; sie läßt jedoch bei niedrigen Aufwandmengen in manchen Fällen zu wünschen übrig.

Ferner ist schon bekannt, daß zahlreiche Azol-Derivate, aromatische Carbonsäure-Derivate, Dicarboxamide, Morpholin-Verbindungen und andere Heterocyclen zur Bekämpfung von Pilzen eingesetzt werden können (vgl. K.H. Büchel "Pflanzenschutz und Schädlingsbekämpfung", Seiten 140-153, Georg Thieme Verlag, Stuttgart 1977, EP-OS 0 040 345, DE-OS 2 324 010, DE-OS 2 201 063, EP-OS 0 112 284, EP-OS 0 304 758 und DD-PS 140 412). Die Wirkung der betreffenden Stoffe ist aber bei niedrigen Aufwandmengen nicht immer befriedigend.

Es wurde nun gefunden, daß die neuen Wirkstoffkombinationen aus 5-(4-Chlorphenyl)-2-methylsulfonyl-1,3,4-oxadiazol der Formel

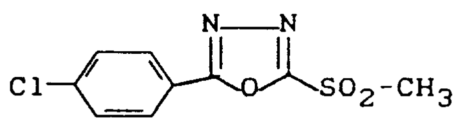

(I)

und

(A) 1-(4-Chlorphenyl)-4,4-dimethyl-3-(1,2,4-triazol-1-yl-methyl)-pentan-3-ol der Formel

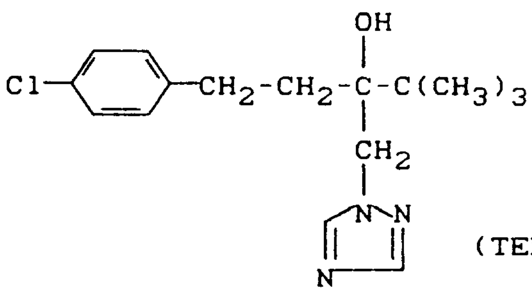

(II)

(TEBUCONAZOLE)

und/oder

(B) einem Azol-Derivat der Formel

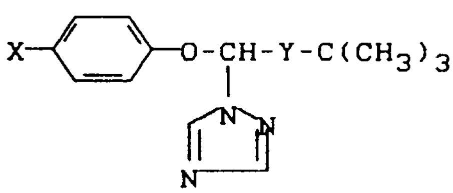

(III)

(IIIa) X = Cl; Y = -CH(OH)-

(TRIADIMENOL)

(IIIb) X = 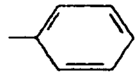 ; Y = -CH(OH)-

(BITERTANOL)

( IIIc) X = Cl; Y = CO

(TRIADIMEFON)
und/oder
(C) dem Azol-Derivat der Formel

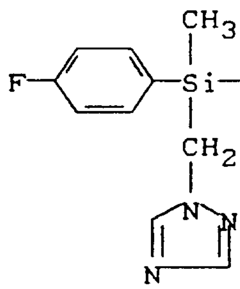

(IV)

(FLUSILAZOLE)

und/oder
(D) dem Azol-Derivat der Formel

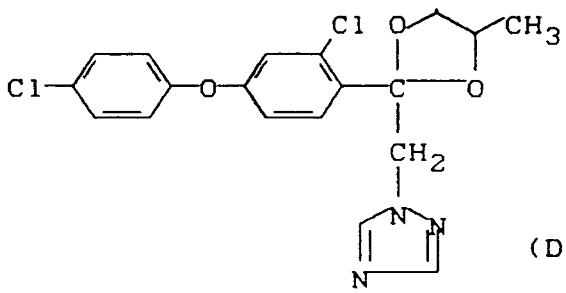

(V)

(DIFENOCONAZOLE)

und/oder
(E) einem Morpholin-Derivat der Formel

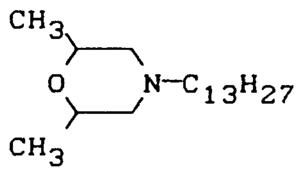

(VIa)

(TRIDEMORPH)

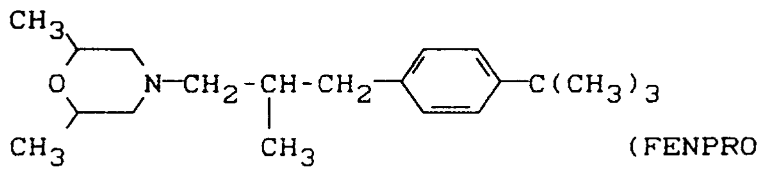

(VIb)

(FENPROPEMORPH)

oder

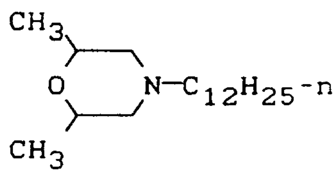

+

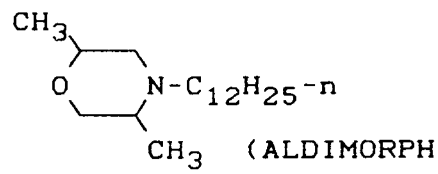

(VIc)

(ALDIMORPH)

und/oder

(F) dem 3-Cyano-4-(2-fluor-3-trifluormethyl-phenyl)-pyrrol der Formel

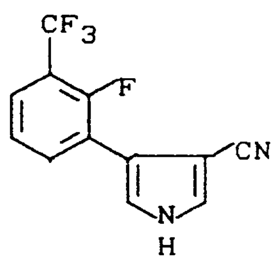

(VII)

und/oder

(G) einem Benzimidazol-Derivat der Formel

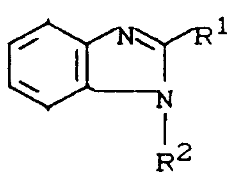

(VIII)

(VIIIa) $R^1$ = 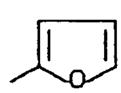 , $R^2$ = H

(FUBERIDAZOL)

(VIIIb) $R^1$ = $-NH-COOCH_3$, $R^2$ = H

(CARBENDAZIM)

(VIIIc) $R^1$ = $-NH-COOCH_3$, $R^2$ = $CO-NH-C_4H_9$

(BENOMYL)
und/oder
(H) einem Dicarboxamid-Derivat der Formel

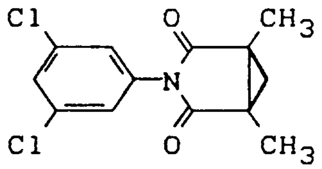

(IXa)

(PROCYMIDONE)

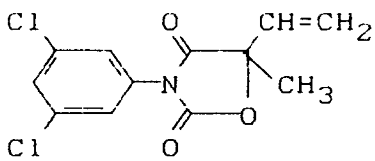

(IXB)

(VINCLOZOLINE)

oder

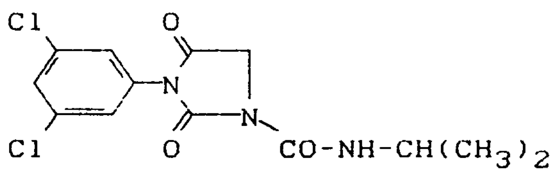

(IXc)

(IPRODIONE)

und/oder
(I) dem Phosphorsäureester der Formel

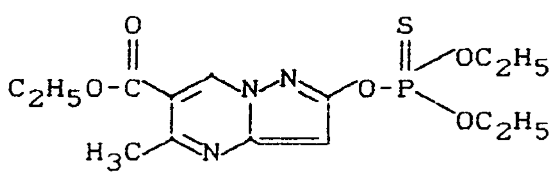

(X)

(PYRAZOPHOS)

und/oder
(K) dem Oximether der Formel

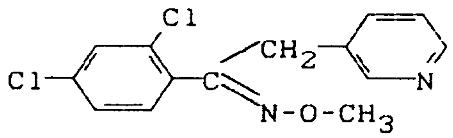

(XI)

(PYRIFENOX)

und/oder

(L) dem Diacyclaminal der Formel

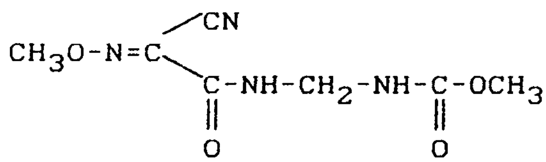

(XII)

und/oder

(M) mindestens einem der Benzimidazole der Formel

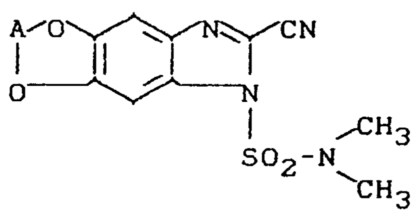

(XIII)

(XIIIa) A = $-CF_2-$

(XIIIb) A = $-CF_2CF_2-$

und/oder

(N) der Verbindung der Formel

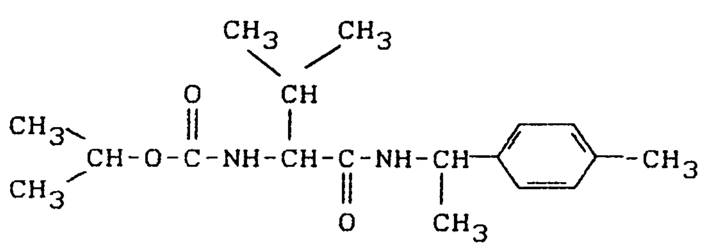

(XIV)

sehr gute fungizide Eigenschaften besitzen.

Überraschenderweise ist die fungizide Wirkung der erfindungsgemäßen Wirkstoffkombinationen wesentlich höher als die Summe der Wirkungen der einzelnen Wirkstoffe. Es liegt also ein nicht vorhersehbarer synergistischer Effekt vor und nicht nur eine Wirkungsergänzung.

Das 5-(4-Chlorphenyl)-2-methylsulfonyl-1,3,4-oxadiazol der Formel (I) und dessen Einsatz als Fungizid sind bekannt (vgl. EP-OS 0 486 798).

Die in dem erfindungsgemäßen Wirkstoffkombinationen außerdem vorhandenen fungiziden Komponenten sind ebenfalls bekannt. Im einzelnen werden die Wirkstoffe in folgenden Publikationen beschrieben:

(A): EP-OS 0 040 345,

(B): DE-OS 2 234 010 und DE-OS 2 201 063,

(C): EP-OS 68 813
(D):EP-OS 0 112 284,
(E): K.H. Büchel "Pflanzenschutz und Schädlingsbekämpfung", Seite 149, Georg Thieme Verlag, Stuttgart 1977 und DD-PS 140 412
(F): EP-OS 0 318 704
(G): DE-AS 1 209 799, DE-OS 1 932 297, US-PS 3 010 968 und K.H. Büchel, loc. cit. Seite 152,
(H): K.H. Büchel, loc. cit. Seite 148,
(I): DBP 1 545 790
(K): EP-OS 049 854
(L): EP-OS 0 304 758
(M): EP-OS 0 517 476

Die erfindungsgemäßen Wirkstoffkombinationen enthalten neben dem Wirkstoff der Formel (I) mindestens einen Wirkstoff von den Verbindungen der Gruppen (A) bis (N). Sie können darüber hinaus auch weitere fungizid wirksame Zumischkomponenten enthalten.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen entfallen auf 1 Gewichtsteil an Wirkstoff der Formel (I)
0,01 bis 5 Gewichtsteile, vorzugsweise
0,02 bis 2 Gewichtsteile an Wirkstoff aus der Gruppe (A),
0,01 bis 5 Gewichtsteile, vorzugsweise
0,02 bis 2 Gewichtsteile an Wirkstoff aus der Gruppe (B),
0,01 bis 5 Gewichtsteile, vorzugsweise
0,02 bis 2 Gewichtsteile an Wirkstoff aus der Gruppe (C),
0,01 bis 5 Gewichtsteile, vorzugsweise
0,02 bis 2 Gewichtsteile an Wirkstoff aus der Gruppe (D),
0,01 bis 5 Gewichtsteile, vorzugsweise
0,02 bis 2 Gewichtsteile an Wirkstoff aus der Gruppe (E),
0,01 bis 5 Gewichtsteile, vorzugsweise
0,02 bis 2 Gewichtsteile an Wirkstoff aus der Gruppe (F),
0,01 bis 5 Gewichtsteile, vorzugsweise
0,02 bis 2 Gewichtsteile an Wirkstoff aus der Gruppe (G),
0,01 bis 5 Gewichtsteile, vorzugsweise
0,02 bis 2 Gewichtsteile an Wirkstoff aus der Gruppe (H),
0,01 bis 5 Gewichtsteile, vorzugsweise
0,02 bis 2 Gewichtsteile an Wirkstoff aus der Gruppe (I),
0,01 bis 5 Gewichtsteile, vorzugsweise
0,02 bis 2 Gewichtsteile an Wirkstoff aus der Gruppe (K),
0,01 bis 5 Gewichtsteile, vorzugsweise
0,02 bis 2 Gewichtsteile an Wirkstoff aus der Gruppe (L),
0,01 bis 5 Gewichtsteile, vorzugsweise
0,02 bis 2 Gewichtsteile an Wirkstoff aus der Gruppe (M) und
0,01 bis 5 Gewichtsteile, vorzugsweise
0,02 bis 2 Gewichtsteile an Wirkstoff aus der Gruppe (N).

Im allgemeinen entfallen auf 1 Gewichtsteil an Wirkstoff der Formel (I) 0,01-5 Gewichtsteile aus den Wirkstoffgruppen A-N, vorzugsweise 0,02-2, besonders bevorzugt 0,05-1 Gewichtsteile.

Die erfindungsgemäßen Wirkstoffkombinationen besitzen sehr gute fungizide Eigenschaften. Sie lassen sich vor allem zur Bekämpfung von phytophathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäßen Wirkstoffkombinationen eignen sich besonders gut zur Bekämpfung von Getreidekrankheiten, wie Erysiphe, Cochliobolus, Pyrenophora und Leptosphaeria, und gegen Pilzbefall an Gemüse, Wein und Obst, beispielsweise gegen Venturia oder Podosphaera an Äpfeln, Botrytis an Bohnen und Phytophthora an Tomaten.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens.

Die erfindungsgemäßen Wirkstoffkombinationen können in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe, sowie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffkombinationen können in den Formulierungen in Mischung mit anderen bekannten Wirkstoffen vorliegen, wie Fungizide, Insektizide, Akarizide und Herbizide, sowie in Mischungen mit Düngemitteln oder Pflanzenwachstumsregulatoren.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden.

Die Anwendung geschieht in üblicher Weise, z.B. durch Gießen, Verspritzen, Versprühen, Verstreuen, Verstreichen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g benötigt.

Bei Behandlung des Bodens sind Wirkstoffkonzentrationen von 0,00001 bis 0,1 Gew.-%, vorzugsweise von 0,0001 bis 0,02 Gew.-%, am Wirkungsort erforderlich.

Die gute fungizide Wirkung der erfindungsgemäßen Wirkstoffkombinationen geht aus den nachfolgenden Beispielen hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzelnen applizierten Wirkstoffe.

Die zu erwartende Wirkung für eine gegebene Kombination zweier Wirkstoffe kann (vgl. Colby, S.R., "Calculating Synergistic and Antagonistic Responses of Herbicide Combinations", Weeds 15, Seiten 20-22, 1967) wie folgt berechnet werden:

Wenn

X den Wirkungsgrad, ausgedrückt in % der unbehandelten Kontrolle, beim Einsatz des Wirkstoffes A

in einer Konzentration von m ppm,

Y den Wirkungsgrad, ausgedrückt in % der unbehandelten Kontrolle, beim Einsatz des Wirkstoffes B in einer Konzentration von n ppm und

E den erwarteten Wirkungsgrad, ausgedrückt in % der unbehandelten Kontrolle, beim Einsatz der Wirkstoffe A und B in Konzentrationen von m und n ppm bedeutet,

dann ist

$$E = X + Y - \frac{X \cdot Y}{100}$$

Ist die tatsächliche fungizide Wirkung größer als berechnet, so ist die Kombination in ihrer Wirkung überadditiv, d.h. es liegt ein synergistischer Effekt vor. In diesem Fall muß der tatsächlich beobachtete Wirkungsgrad größer sein als der aus der oben angeführten Formel errechnete Wert für den erwarteten Wirkungsgrad (E).

Aus den Tabellen der folgenden Beispiele geht eindeutig hervor, daß die gefundene Wirkung der erfindungsgemäßen Wirkstoffkombinationen größer ist als die berechnete, d.h., daß ein synergistischer Effekt vorliegt.

Beispiel 1

Venturia-Test (Apfel)/protektiv

Zur Herstellung einer zweckmäßigen Wirkstoffzubereitung werden handelsübliche Wirkstoff-Formulierungen (einzelne Wirkstoffe oder Wirkstoffkombinationen) mit Wasser auf die jeweils gewünschte Konzentration verdünnt.

Zur Prüfung auf protektive Wirksamkeit bespritzt man junge Pflanzen mit der jeweiligen Wirkstoffzubereitung bis zur Tropfnässe. Nach Antrocknen des Spritzbelages werden die Pflanzen mit einer wäßrigen Konidiensuspension des Apfelschorferregers (Venturia inaequalis) inokuliert und verbleiben dann 1 Tag bei 20 °C und 100 % relativer Luftfeuchtigkeit in einer Inkubationskabine.

Die Pflanzen werden dann im Gewächshaus bei 20 °C und einer relativen Luftfeuchtigkeit von ca. 70 % aufgestellt.

12 Tage nach der Inokulation erfolgt die Auswertung.

Um Synergismus zwischen den in diesem Versuch verwendeten Wirkstoffen aufzuzeigen, wurden die Resultate nach der von Colby beschriebenen Methode (vgl. Seite 14) ausgewertet.

Wirkstoffe, Wirkstoffkonzentrationen und Versuchsergebnisse gehen aus den folgenden Tabellen hervor.

Tabelle 1-A

Venturia-Test (Apfel) / protektiv

| Wirkstoff | Wirkstoffkonzentration in ppm | Wirkungsgrad in % der unbehandelten Kontrolle |
|---|---|---|
| 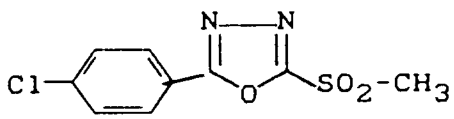 (I) | 2,5 | 16 |
| 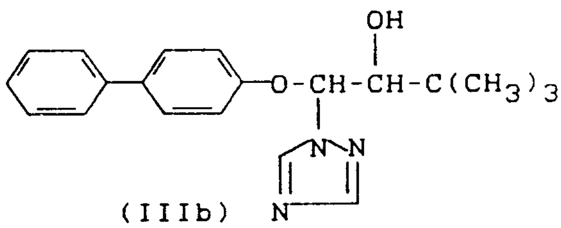 (IIIb) | 0,25 | 4 |

Erfindungsgemäße Mischung:

| | | gefunden | berechnet*) |
|---|---|---|---|
| (I) + (IIIb) (10:1) | 2,5 + 0,25 | 44 | 19 |

*) Berechnet nach der Colby-Formel (vgl. Seite 14)

Tabelle 1-B

Venturia-Test (Apfel) / protektiv

| Wirkstoff | Wirkstoff-konzentration in ppm | Wirkungsgrad in % der unbehandelten Kontrolle |
|---|---|---|
| 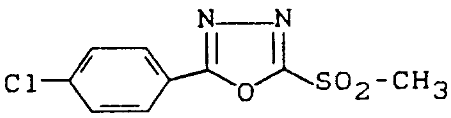 (I) | 2,5 | 35 |
| 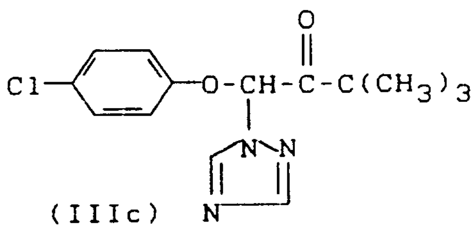 (IIIc) | 0,5 | 0 |

<u>Erfindungsgemäße Mischung:</u>

| | | gefunden | berechnet*) |
|---|---|---|---|
| (I) + (IIIc) (5:1) | 2,5 + 0,5 | 50 | 35 |

*) Berechnet nach der Colby-Formel (vgl. Seite 14)

Tabelle 1-C

Venturia-Test (Apfel) / protektiv

| Wirkstoff | Wirkstoffkonzentration in ppm | Wirkungsgrad in % der unbehandelten Kontrolle |
|---|---|---|
| 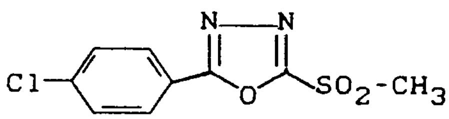 (I) | 2,5 | 35 |
| 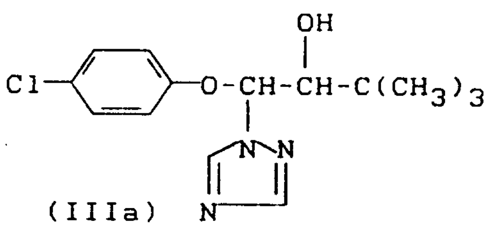 (IIIa) | 0,125 | 0 |

<u>Erfindungsgemäße Mischung:</u>

| | | gefunden | berechnet*) |
|---|---|---|---|
| (I) + (IIIa) (20:1) | 2,5 + 0,125 | 50 | 35 |

*) Berechnet nach der Colby-Formel (vgl. Seite 14)

Tabelle 1-D

Venturia-Test (Apfel) / protektiv

| Wirkstoff | Wirkstoff-konzentration in ppm | Wirkungsgrad in % der unbehandelten Kontrolle |
|---|---|---|
| 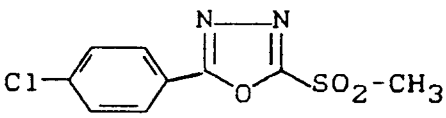 (I) | 2,5 | 35 |
| 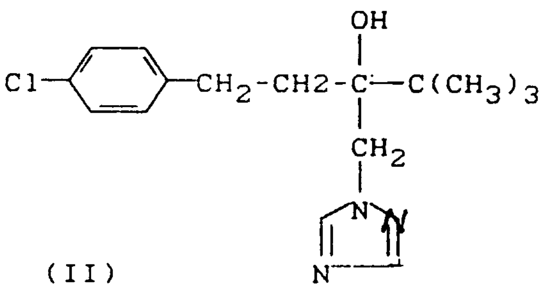 (II) | 0,125 | 15 |

Erfindungsgemäße Mischung:

| | | gefunden | berechnet*) |
|---|---|---|---|
| (I) + (II) (20:1) | 2,5 + 0,125 | 68 | 45 |

*) Berechnet nach der Colby-Formel (vgl. Seite 14)

Tabelle 1-E

Venturia-Test (Apfel) / protektiv

| Wirkstoff | Wirkstoff-konzentration in ppm | Wirkungsgrad in % der unbehandelten Kontrolle |
|---|---|---|
| 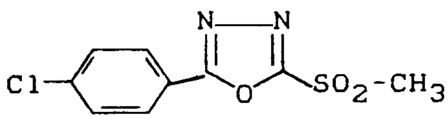 (I) | 2,5 | 35 |
| 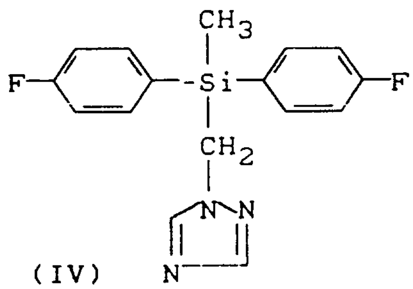 (IV) | 0,01 | 0 |

Erfindungsgemäße Mischung:

| | | gefunden | berechnet*) |
|---|---|---|---|
| (I) + (IV) (250:1) | 2,5 + 0,01 | 53 | 35 |

*) Berechnet nach der Colby-Formel (vgl. Seite 14)

Tabelle 1-F

Venturia-Test (Apfel) / protektiv

| Wirkstoff | Wirkstoffkonzentration in ppm | Wirkungsgrad in % der unbehandelten Kontrolle |
|---|---|---|
| 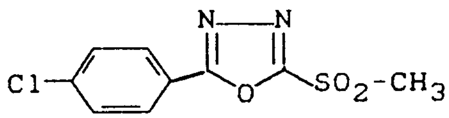 (I) | 2,5 | 35 |
| 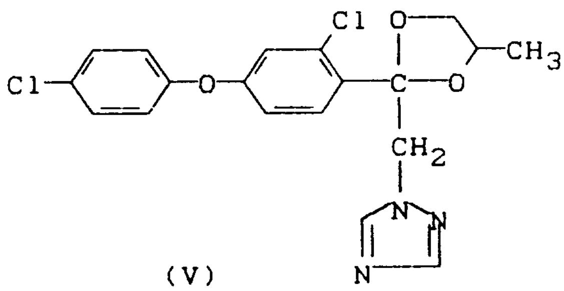 (V) | 0,025 | 68 |

Erfindungsgemäße Mischung:

| | | gefunden | berechnet*) |
|---|---|---|---|
| (I) + (V) (100:1) | 2,5 + 0,025 | 93 | 79 |

*) Berechnet nach der Colby-Formel (vgl. Seite 14)

Tabelle 1-G

Venturia-Test (Apfel) / protektiv

| Wirkstoff | Wirkstoff-konzentration in ppm | Wirkungsgrad in % der unbehandelten Kontrolle |
|---|---|---|
| 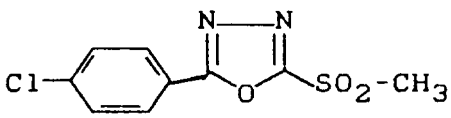 (I) | 2,5 | 35 |
| 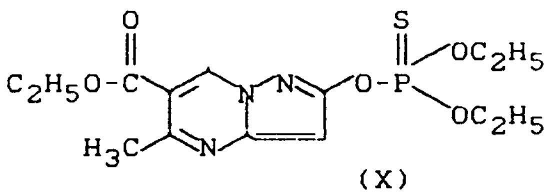 (X) | 1 | 10 |

<u>Erfindungsgemäße Mischung:</u>

| | | gefunden | berechnet*) |
|---|---|---|---|
| (I) + (X) (2,5:1) | 2,5 + 1 | 65 | 41 |

*) Berechnet nach der Colby-Formel (vgl. Seite 14)

Tabelle 1-H

Venturia-Test (Apfel) / protektiv

| Wirkstoff | Wirkstoff-konzentration in ppm | Wirkungsgrad in % der unbehandelten Kontrolle |
|---|---|---|
| 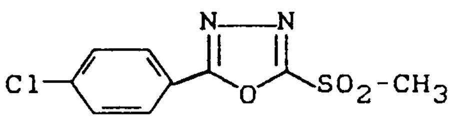 (I) | 2,5 | 35 |
| 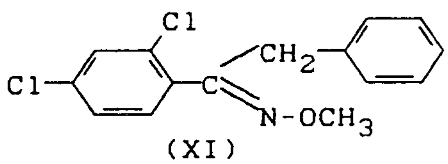 (XI) | 1 | 46 |

Erfindungsgemäße Mischung:

| | | gefunden | berechnet*) |
|---|---|---|---|
| (I) + (Xl) (2,5:1) | 2,5 + 1 | 73 | 65 |

*) Berechnet nach der Colby-Formel (vgl. Seite 14)

Tabelle 1-I

Venturia-Test (Apfel) / protektiv

| Wirkstoff | Wirkstoffkonzentration in ppm | Wirkungsgrad in % der unbehandelten Kontrolle |
|---|---|---|
| 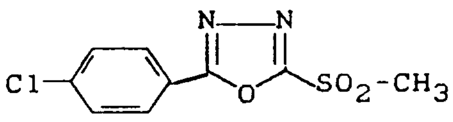 (I) | 2,5 | 35 |
| 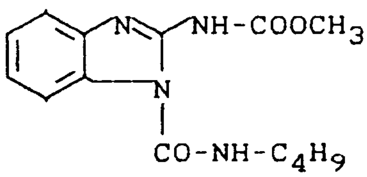 (VIIIc) | 0,5 | 0 |

<u>Erfindungsgemäße Mischung:</u>

| | | gefunden | berechnet*) |
|---|---|---|---|
| (I) + (VIIIc) (5:1) | 2,5 + 0,5 | 50 | 35 |

*) Berechnet nach der Colby-Formel (vgl. Seite 14)

<u>Beispiel 2</u>

Podosphaera-Test (Apfel)/protektiv

Zur Herstellung einer zweckmäßigen Wirkstoffzubereitung werden handelsübliche Wirkstoff-Formulierungen (einzelne Wirkstoffe oder Wirkstoffkombinationen) mit Wasser auf die jeweils gewünschte Konzentration verdünnt.

Zur Prüfung auf protektive Wirksamkeit bespritzt man junge Pflanzen mit der jeweiligen Wirkstoffzubereitung bis zur Tropfnässe. Nach Antrocknen des Spritzbelages werden die Pflanzen durch Bestäuben mit Konidien des Apfelmehltauerregers (Podosphaera leucotricha) inokuliert

Die Pflanzen werden dann im Gewächshaus bei 23 °C und einer relativen Luftfeuchtigkeit von ca. 70 % aufgestellt.

10 Tage nach der Inokulation erfolgt die Auswertung.

Um Synergismus zwischen den in diesem Versuch verwendeten Wirkstoffen aufzuzeigen, wurden die Resultate nach der von Colby beschriebenen Methode (vgl. Seite 14) ausgewertet.

Wirkstoffe, Wirkstoffkonzentrationen und Versuchsergebnisse gehen aus den folgenden Tabellen hervor.

Tabelle 2

Podosphaera-Test (Apfel) / protektiv

| Wirkstoff | Wirkstoffkonzentration in ppm | Wirkungsgrad in % der unbehandelten Kontrolle |
|---|---|---|
| 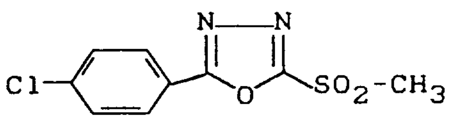 (I) | 2,5 | 17 |
| 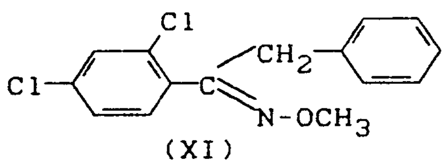 (XI) | 1 | 35 |

Erfindungsgemäße Mischung:

| Wirkstoff | Wirkstoffkonzentration in ppm | gefunden | berechnet*) |
|---|---|---|---|
| (I) + (XI) (2,5:1) | 2,5 + 1 | 57 | 46 |

*) Berechnet nach der Colby-Formel (vgl. Seite 14)

Beispiel 3

Botrytis-Test (Buschbohne) / protektiv

Zur Herstellung einer zweckmäßigen Wirkstoffzubereitung werden handelsübliche Wirkstoff-Formulierungen (einzelne Wirkstoffe oder Wirkstoffkombinationen) mit Wasser auf die jeweils gewünschte Konzentration verdünnt.

Zur Prüfung auf protektive Wirksamkeit bespritzt man junge Pflanzen mit der jeweiligen Wirkstoffzubereitung bis zur Tropfnässe. Nach Antrocknen des Spritzbelages werden auf jedes Blatt 2 kleine mit Botrytis cinerea bewachsene Agarstückchen aufgelegt. Die inokulierten Pflanzen werden in einer abgedunkelten, feuchten Kammer bei 20 °C aufgestellt. 3 Tage nach der Inokulation wird die Größe der Befallsflecken auf den Blättern ausgewertet.

Um Synergismus zwischen den in diesem Versuch verwendeten Wirkstoffen aufzuzeigen, wurden die Resultate nach der von Colby beschriebenen Methode (vgl. Seite 14) ausgewertet.

Wirkstoffe, Wirkstoffkonzentrationen und Versuchsergebnisse gehen aus den folgenden Tabellen hervor.

Tabelle 3-A

Botrytis-Test (Bohne) / protektiv

| Wirkstoff | Wirkstoff-konzentration in ppm | Wirkungsgrad in % der unbehandelten Kontrolle |
|---|---|---|
| 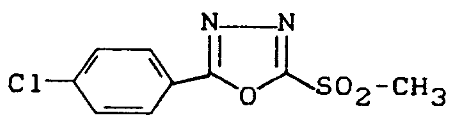 (I) | 25 | 9 |
| 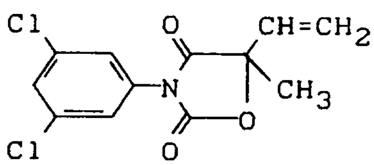 (IXb) | 25 | 33 |
| 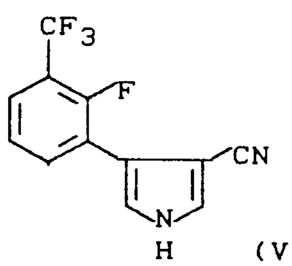 (VII) | 5 | 29 |

Erfindungsgemäße Mischung:

| | | gefunden | berechnet*) |
|---|---|---|---|
| (I) + (IXb) (1:1) | 25 + 25 | 81 | 39 |
| (I) + (VII) (5:1) | 25 + 5 | 83 | 35 |

*) Berechnet nach der Colby-Formel (vgl. Seite 14)

Tabelle 3-B

Botrytis-Test (Bohne) / protektiv

| Wirkstoff | Wirkstoff-konzentration in ppm | Wirkungsgrad in % der unbehandelten Kontrolle |
|---|---|---|
| 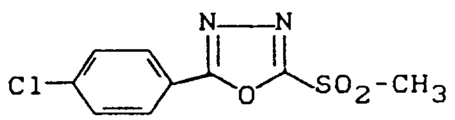 (I) | 50 | 56 |
| 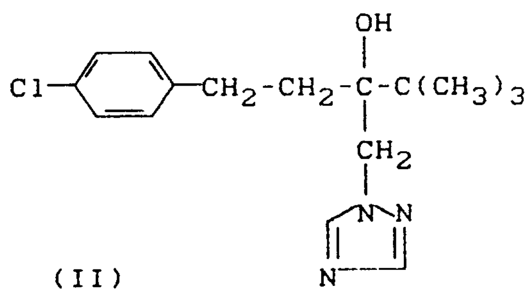 (II) | 12,5 | 37 |

Erfindungsgemäße Mischung:

| | | gefunden | berechnet*) |
|---|---|---|---|
| (I) + (II) (4:1) | 50 + 12,5 | 92 | 72 |

*) Berechnet nach der Colby-Formel (vgl. Seite 14)

Beispiel 4

Phytophthora-Test (Tomate) / protektiv

Zur Herstellung einer zweckmäßigen Wirkstoffzubereitung werden handelsübliche Wirkstoff-Formulierungen (einzelne Wirkstoffe oder Wirkstoffkombinationen) mit Wasser auf die jeweils gewünschte Konzentration verdünnt.

Zur Prüfung auf protektive Wirksamkeit bespritzt man junge Pflanzen mit der jeweiligen Wirkstoffzubereitung bis zur Tropfnässe. Nach Antrocknen des Spritzbelages werden die Pflanzen mit einer wäßrigen Sporensuspenvon Phytophthora infestans inokuliert.

Die Pflanzen werden in einer Inkubationskabine mit 100 % relativer Luftfeuchtigkeit und ca, 20 °C aufgestellt.

3 Tage nach der Inokulation erfolgt die Auswertung.

Um Synergismus zwischen den in diesem Versuch verwendeten Wirkstoffen aufzuzeigen, wurden die Resultate nach der von Colby beschriebenen Methode (vgl. Seite 14) ausgewertet.

Wirkstoffe, Wirkstoffkonzentrationen und Versuchsergebnisse gehen aus den folgenden Tabellen hervor.

Tabelle 4

Phytophthora-Test (Tomate) / protektiv

| Wirkstoff | Wirkstoffkonzentration in ppm | Wirkungsgrad in % der unbehandelten Kontrolle |
|---|---|---|
| 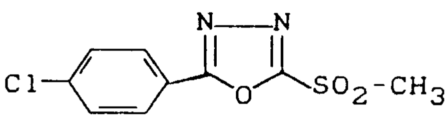 (I) | 2,5 | 0 |
| 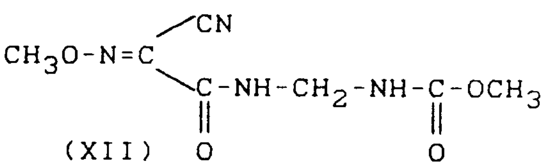 (XII) | 10 | 50 |

Erfindungsgemäße Mischung:

| | | gefunden | berechnet*) |
|---|---|---|---|
| (I) + (XII) (1:4) | 2,5 + 10 | 79 | 50 |

*) Berechnet nach der Colby-Formel (vgl. Seite 14)

Beispiel 5

Erysiphe-Test (Gerste)/kurativ

Zur Herstellung einer zweckmäßigen Wirkstoffzubereitung werden handelsübliche Wirkstoff-Formulierungen (einzelne Wirkstoffe oder Wirkstoffkombinationen) mit Wasser auf die jeweils gewünschte Konzentration verdünnt.

Zur Prüfung auf kurative Wirksamkeit werden junge Pflanzen mit Sporen von Erysiphe graminis f.sp. hordei bestäubt. 48 Stunden nach der Inokulation werden die Pflanzen mit der jeweiligen Wirkstoffzubereitung besprüht.

Die Pflanzen werden in einem Gewächshaus bei einer Temperatur von ca. 20 °C und einer relativen Luftfeuchtigkeit von ca. 80 % aufgestellt, um die Entwicklung von Mehltaupusteln zu begünstigen.

7 Tage nach der Inokulation erfolgt die Auswertung.

Wirkstoffe, Wirkstoffkonzentrationen und Versuchsergebnisse gehen aus der folgenden Tabelle hervor.

Tabelle 5

Erysiphe-Test (Gerste) / kurativ

| Wirkstoff | Wirkstoffkonzentration in g/ha | Wirkungsgrad in % der unbehandelten Kontrolle |
|---|---|---|
| 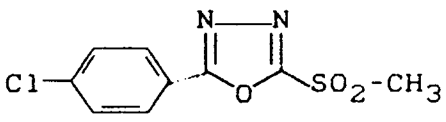 (I) | 2,2 | 18 |
| 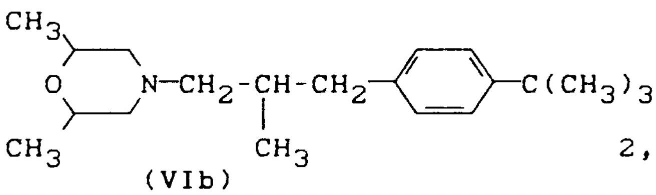 (VIb) | 2,2 | 39 |
| <u>Erfindungsgemäße Mischung:</u> | | |
| (I) + (VIb) (10:1) | 2,0 + 0,2 | 70 |

Beispiel 6

Erysiphe-Test (Gerste)/protektiv

Zur Herstellung einer zweckmäßigen Wirkstoffzubereitung werden handelsübliche Wirkstoff-Formulierungen (einzelne Wirkstoffe oder Wirkstoffkombinationen) mit Wasser auf die jeweils gewünschte Konzentration verdünnt.

Zur Prüfung auf protektive Wirksamkeit besprüht man junge Pflanzen mit der jeweiligen Wirkstoffzubereitung taufeucht. Nach Antrocknen des Spritzbelages werden die Pflanzen mit Sporen von Erysiphe graminis f.sp. hordei bestäubt.

Die Pflanzen werden in einem Gewächshaus bei einer Temperatur von ca. 20 °C und einer relativen Luftfeuchtigkeit von ca. 80 % aufgestellt, um die Entwicklung von Mehltaupusteln zu begünstigen.

7 Tage nach der Inokulation erfolgt die Auswertung.

Wirkstoffe, Wirkstoffkonzentrationen und Versuchsergebnisse gehen aus der folgenden Tabelle hervor.

Tabelle 6

Erysiphe-Test (Gerste) / protektiv

| Wirkstoff | Wirkstoff-konzentration in g/ha | Wirkungsgrad in % der unbehandelten Kontrolle |
|---|---|---|
| 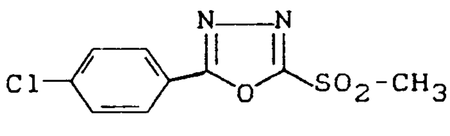 (I) | 2,2 | 35 |
| 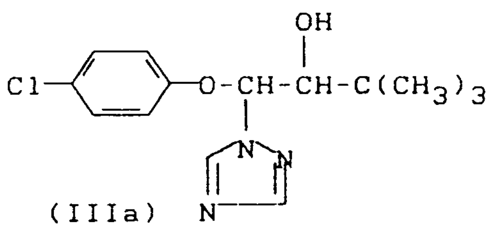 (IIIa) | 2,2 | 85 |
| <u>Erfindungsgemäße Mischung:</u> | | |
| (I) + (IIIa) (10:1) | 2,0 + 0,2 | 100 |

<u>Beispiel 7</u>

Erysiphe-Test (Weizen)/protektiv

Zur Herstellung einer zweckmäßigen Wirkstoffzubereitung werden handelsübliche Wirkstoff-Formulierungen (einzelne Wirkstoffe oder Wirkstoffkombinationen) mit Wasser auf die jeweils gewünschte Konzentration verdünnt.

Zur Prüfung auf protektive Wirksamkeit besprüht man junge Pflanzen mit der jeweiligen Wirkstoffzubereitung taufeucht. Nach Antrocknen des Spritzbelages werden die Pflanzen mit Sporen von Erysiphe graminis f.sp. tritici bestäubt.

Die Pflanzen werden in einem Gewächshaus bei einer Temperatur von ca. 20 °C und einer relativen Luftfeuchtigkeit von ca. 80 % aufgestellt, um die Entwicklung von Mehltaupusteln zu begünstigen.

7 Tage nach der Inokulation erfolgt die Auswertung.

Wirkstoffe, Wirkstoffkonzentrationen und Versuchsergebnisse gehen aus der folgenden Tabelle hervor.

Tabelle 7

Erysiphe-Test (Weizen) / protektiv

| Wirkstoff | Wirkstoff-konzentration in g/ha | Wirkungsgrad in % der unbehandelten Kontrolle |
|---|---|---|
| 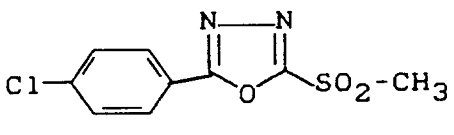 (I) | 2,2 | 12 |
| 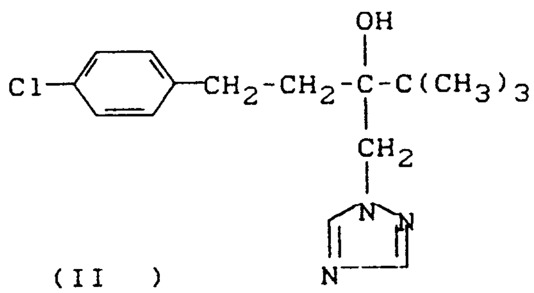 (II ) | 2,2 | 33 |
| **Erfindungsgemäße Mischung:** | | |
| (I) + (II) (10:1) | 2,0 + 0,2 | 50 |

Beispiel 8

Leptosphaeria nodorum-Test (Weizen) / protektiv

Zur Herstellung einer zweckmäßigen Wirkstoffzubereitung werden handelsübliche Wirkstoff-Formulierungen (einzelne Wirkstoffe oder Wirkstoffkombinationen) mit Wasser auf die jeweils gewünschte Konzentration verdünnt.

Zur Prüfung auf protektive Wirksamkeit besprüht man junge Pflanzen mit der jeweiligen Wirkstoffzubereitung taufeucht. Nach Antrocknen des Spritzbelages werden die Pflanzen mit einer Sporensuspension von Leptosphaeria nodorum besprüht. Die Pflanzen verbleiben 48 Stunden bei 20 °C und 100 % relativer Luftfeuchtigkeit in einer Inkubationskabine.

Die Pflanzen werden in einem Gewächshaus bei einer Temperatur von ca. 15 °C und einer relativen Luftfeuchtigkeit von ca. 80 % aufgestellt.

10 Tage nach der Inokulation erfolgt die Auswertung.

Wirkstoffe, Wirkstoffkonzentrationen und Versuchsergebnisse gehen aus der folgenden Tabelle hervor.

Tabelle 8

Leptosphaeria nodorum-Test (Weizen) / protektiv.

| Wirkstoff | Wirkstoffkonzentration in g/ha | Wirkungsgrad in % der unbehandelten Kontrolle |
|---|---|---|
| 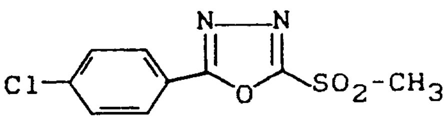 (I) | 220<br>22 | 11<br>11 |
| 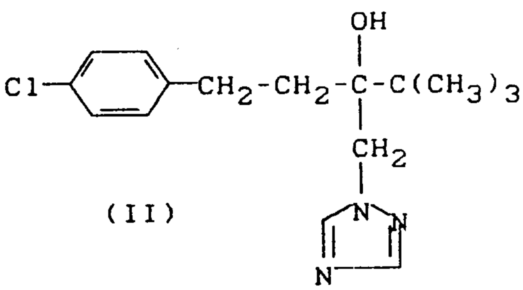 (II) | 22 | 11 |
| 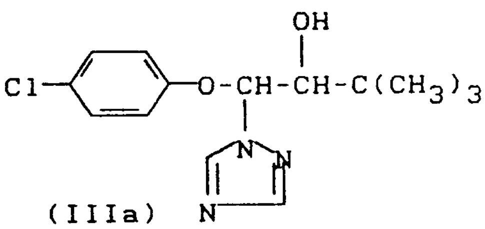 (IIIa) | 220 | 21 |
| 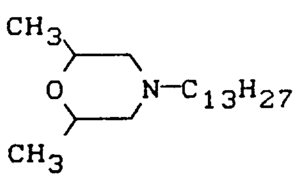 (VIa) | 220 | 0 |

<u>Erfindungsgemäße Mischung:</u>

| | | |
|---|---|---|
| (I) + (II) (10:1) | 20 + 2 | 55 |

Tabelle 8 (Fortsetzung)

Leptosphaeria nodorum-Test (Weizen) / protektiv

| Wirkstoff | Wirkstoff-konzentration in g/ha | Wirkungsgrad in % der unbehandelten Kontrolle |
|---|---|---|
| (I) + (IIIa) (10:1) | 200 + 20 | 70 |
| (I) + (VIa) (10:1) | 200 + 20 | 70 |

Beispiel 9

Cochliobolus sativus-Test (Gerste) / protektiv.

Zur Herstellung einer zweckmäßigen Wirkstoffzubereitung werden handelsübliche Wirkstoff-Formulierungen (einzelne Wirkstoffe oder Wirkstoffkombinationen) mit Wasser auf die jeweils gewünschte Konzentration verdünnt.

Zur Prüfung auf protektive Wirksamkeit besprüht man junge Pflanzen mit der jeweiligen Wirkstoffzubereitung taufeucht. Nach Antrocknen des Spritzbelages werden die Pflanzen mit einer Konidiensuspension von Cochliobolus sativus besprüht. Die Pflanzen verbleiben 48 Stunden bei 20 °C und 100 % relativer Luftfeuchtigkeit in einer Inkubationskabine.

Die Pflanzen werden in einem Gewächshaus bei einer Temperatur von ca. 20 °C und einer relativen Luftfeuchtigkeit von ca. 80 % aufgestellt.

7 Tage nach der Inokulation erfolgt die Auswertung.

Wirkstoffe, Wirkstoffkonzentrationen und Versuchsergebnisse gehen aus der folgenden Tabelle hervor.

Tabelle 9

Cochliobolus-Test (Gerste) / protektiv

| Wirkstoff | Wirkstoff-konzentration g/ ha | Wirkungsgrad in % der unbehandelten Kontrolle |
|---|---|---|
| 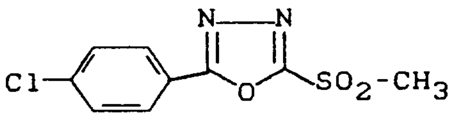 (I) | 220 | 0 |
| 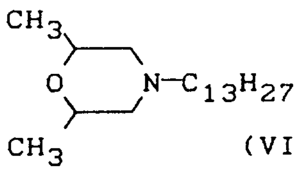 (VIa) | 220 | 0 |
| **Erfindungsgemäße Mischung:** | | |
| (I) + (IVa) (10:1) | 200 + 20 | 67 |

Beispiel 10

Pyrenophora teres-Test (Gerste) / protektiv

Zur Herstellung einer zweckmäßigen Wirkstoffzubereitung werden handelsübliche Wirkstoff-Formulierungen (einzelne Wirkstoffe oder Wirkstoffkombinationen) mit Wasser auf die jeweils gewünschte Konzentration verdünnt.

Zur Prüfung auf protektive Wirksamkeit besprüht man junge Pflanzen mit der jeweiligen Wirkstoffzubereitung taufeucht. Nach Antrocknen des Spritzbelages werden die Pflanzen mit einer Konidiensuspension von Pytenophora teres besprüht. Die Pflanzen verbleiben 48 Stunden bei 20 °C und 100 % relativer Luftfeuchtigkeit in einer Inkubationskabine.

Die Pflanzen werden in einem Gewächshaus bei einer Temperatur von ca. 20 °C und einer relativen Luftfeuchtigkeit von ca. 80 % aufgestellt.

7 Tage nach der Inokulation erfolgt die Auswertung.

Wirkstoffe, Wirkstoffkonzentrationen und Versuchsergebnisse gehen aus der folgenden Tabelle hervor.

Tabelle 10

Pyrenophora teres-Test (Gerste) / protektiv

| Wirkstoff | Wirkstoff-konzentration in g/ha | Wirkungsgrad in % der unbehandelten Kontrolle |
|---|---|---|
| 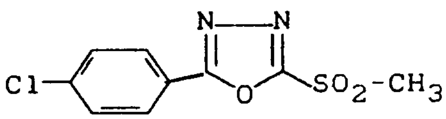 (I) | 1100<br>220 | 72<br>30 |
| 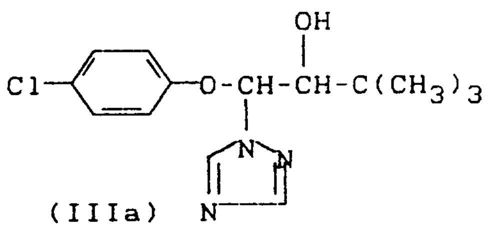 (IIIa) | 1100 | 72 |
| 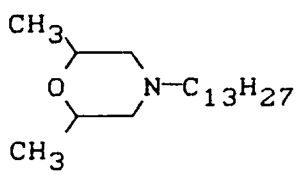 (VIa) | 220 | 36 |
| **Erfindungsgemäße Mischung:** | | |
| (I) + (IIIa) (10:1) | 1000 + 100 | 90 |
| (I) + (VIa) (10:1) | 200 + 20 | 51 |

## Patentansprüche

1. Fungizide Mittel, gekennzeichnet durch einen Gehalt an einer Wirkstoffkombination bestehend aus 5-(4-Chlorphenyl)-2-methylsulfonyl-1,3,4-oxadiazol der Formel

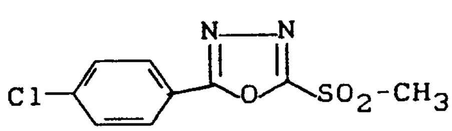 (I)

und

(A) 1-(4-Chlorphenyl)-4,4-dimethyl-3-(1,2,4-triazol-1-yl-methyl)-pentan-3-ol der Formel

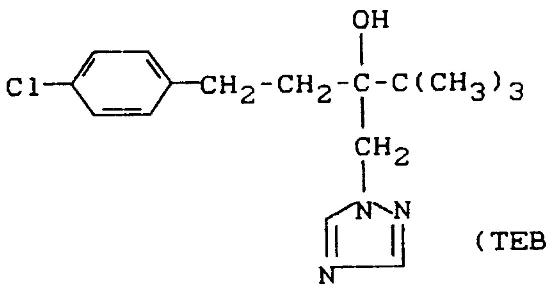

(II)

(TEBUCONAZOLE)

und/oder

B) einem Azol-Derivat der Formel

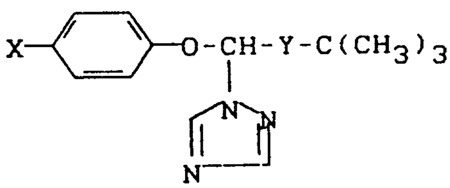

(III)

(IIIa) X = Cl; Y = -CH(OH)-

(TRIADIMENOL)

(IIIb) X = 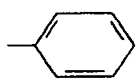 ; Y = -CH(OH)-

(BITERTANOL)

(IIIc) X = Cl; Y = CO

(TRIADIMEFON)

und/oder

C) dem Azol-Derivat der Formel

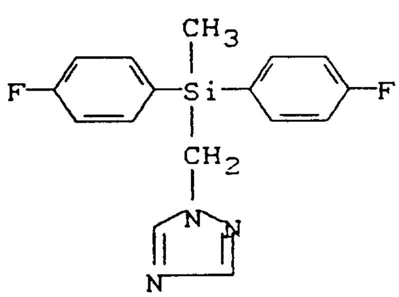

(IV)

(FLUSILAZOLE)

und/oder

D) dem Azol-Derivat der Formel

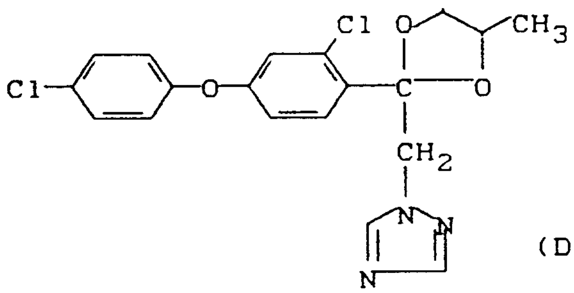

(V)

(DIFENOCONAZOLE)

und/oder

E) einem Morpholin-Derivat der Formel

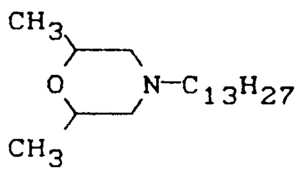

(VIa)

(TRIDEMORPH)

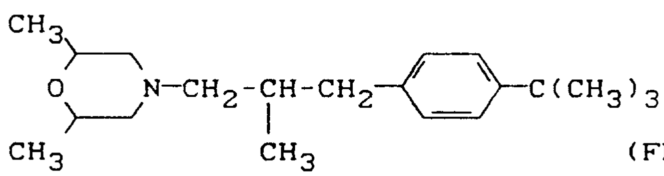

(VIb)

(FENPROPEMORPH)

oder

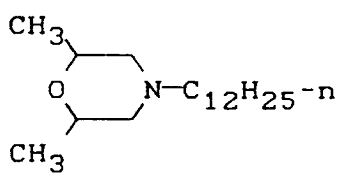

+

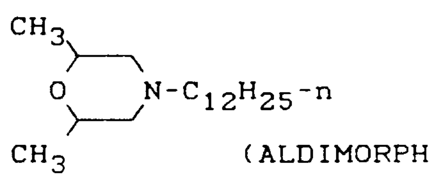

(VIc)

(ALDIMORPH)

und/oder

F) dem 3-Cyano-4-(2-fluor-3-trifluormethylphenyl)-pyrrol der Formel

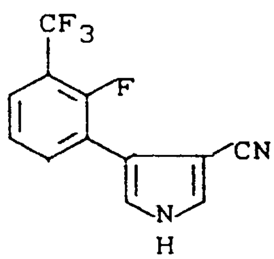

(VII)

und/oder

G) einem Benzimidazol-Derivat der Formel

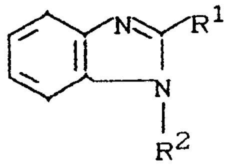

(VIII)

(VIIIa) $R^1$ = 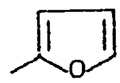, $R^2$ = H
(FUBERIDAZOL)

(VIIIb) $R^1$ = $-NH-COOCH_3$, $R^2$ = H

(CARBENDAZIM)

(VIIIc) $R^1$ = $-NH-COOCH_3$, $R^2$ = $CO-NH-C_4H_9$

(BENOMYL)

und/oder
H) einem Dicarboxamid-Derivat der Formel

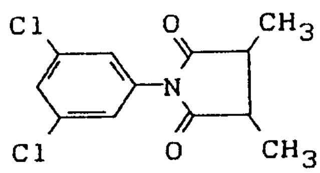

(IXa)

(PROCYMIDONE)

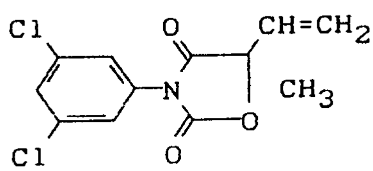

(IXB)

(VINCLOZOLINE)

oder

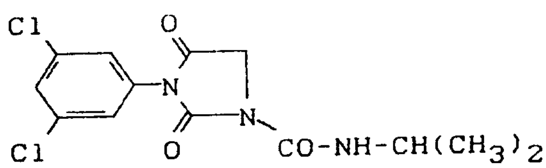

(IXc)

(IPRODIONE)

und/oder
(I) dem Phosphorsäureester der Formel

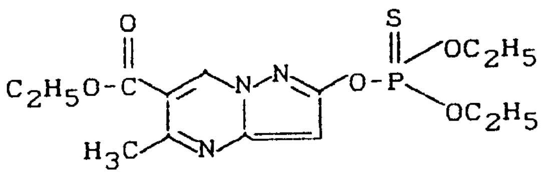

(X)

(PYRAZOPHOS)

und/oder
(K) dem Oximether der Formel

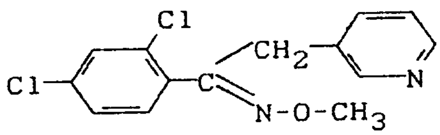

(XI)

(PYRIFENOX)

und/oder
(L) dem Diacyclaminal der Formel

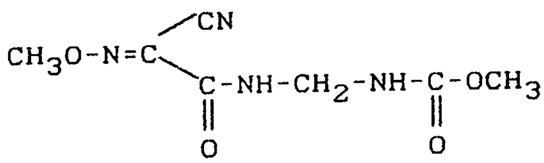

(XII)

und/oder
(M) mindestens einem der Benzimidazole der Formel

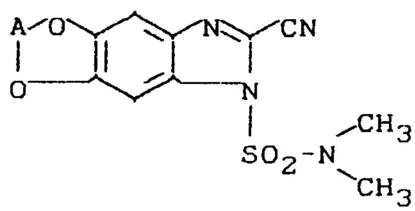

(XIII)

(XIIIa) A = $-CF_2-$

(XIIIb) A = $-CF_2CF_2-$

und/oder
(N) der Verbindung der Formel

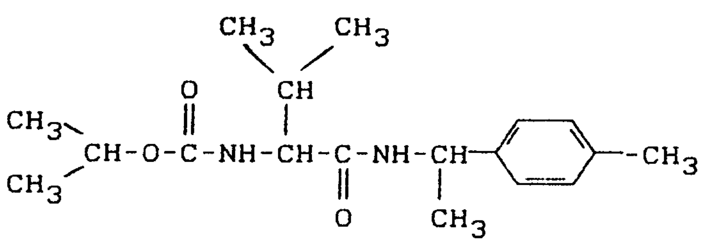

(XIV)

2. Mittel gemäß Anspruch 1, dadurch gekennzeichnet, daß in den Wirkstoffkombinationen auf 1 Gewichtsteil an Wirkstoff der Formel (I)
0,01- 5 Gewichtsteile an Wirkstoff aus der Gruppe A entfallen,
0,01- 5 Gewichtsteile an Wirkstoff aus der Gruppe B entfallen,
0,01- 5 Gewichtsteile an Wirkstoff aus der Gruppe C entfallen,
0,01- 5 Gewichtsteile an Wirkstoff aus der Gruppe D entfallen,
0,01- 5 Gewichtsteile an Wirkstoff aus der Gruppe E entfallen,
0,01- 5 Gewichtsteile an Wirkstoff aus der Gruppe F entfallen,
0,01- 5 Gewichtsteile an Wirkstoff aus der Gruppe G entfallen,
0,01- 5 Gewichtsteile an Wirkstoff aus der Gruppe H entfallen,
0,01- 5 Gewichtsteile an Wirkstoff aus der Gruppe I entfallen,
0,01- 5 Gewichtsteile an Wirkstoff aus der Gruppe K entfallen,
0,01- 5 Gewichtsteile an Wirkstoff aus der Gruppe L entfallen,
0,01- 5 Gewichtsteile an Wirkstoff aus der Gruppe M entfallen,
0,01- 5 Gewichtsteile an Wirkstoff aus der Gruppe N entfallen.

3. Verfahren zur Bekämpfung von Pilzen, dadurch gekennzeichnet, daß man Wirkstoffkombinationen gemäß Anspruch 1 auf die Pilze und/oder deren Lebensraum einwirken läßt.

4. Verwendung von Wirkstoffkombinationen gemäß Anspruch 1 zur Bekämpfung von Pilzen.

5. Verfahren zur Herstellung von fungiziden Mitteln, dadurch gekennzeichnet, daß man Wirkstoffkombinationen gemäß Anspruch 1 mit Streckmitteln und/oder oberflächenaktiven Stoffen vermischt.

Europäisches Patentamt

# EUROPÄISCHER RECHERCHENBERICHT

Nummer der Anmeldung
EP 93 11 4051

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| D,A | EP-A-0 486 798 (BAYER)<br>* Seite 2, Zeile 12 - Zeile 32 *<br>* Seite 2, Zeile 57 - Seite 3, Zeile 5 *<br>* Seite 6, Zeile 29 - Zeile 31 *<br>* Anspruch 4 *<br>--- | 1-5 | A01N43/82<br>//(A01N43/82, 57:16,55:00, 47:38,47:18, 47:12,43:90, 43:84,43:76, 43:653,43:52, 43:40,43:36, 37:32) |
| A | CHEMICAL ABSTRACTS, vol. 84, no. 17, 26. April 1976, Columbus, Ohio, US; abstract no. 121736,<br>S.GIRI ET AL. 'Studies in oxadiazoles. Synthesis of some 2-mercapto-1,3,4-oxadiazoles and related compounds as potential fungicides.'<br>* Zusammenfassung *<br>& AGRIC.BIOL.CHEM.<br>Bd. 40, Nr. 1 , 1976<br>Seiten 17 - 21<br>----- | 1-5 | |

| RECHERCHIERTE SACHGEBIETE (Int.Cl.5) |
|---|
| A01N |

Der vorliegende Recherchenbericht wurde für alle Patentansprüche erstellt

| Recherchenort | Abschlußdatum der Recherche | Prüfer |
|---|---|---|
| DEN HAAG | 21. Dezember 1993 | Lamers, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)